(19) Europäisches Patentamt

European Patent Office

Office européen des brevets

(11) Publication number: **0 020 594**
**B1**

(12) **EUROPEAN PATENT SPECIFICATION**

(45) Date of publication of patent specification: 03.06.87

(51) Int. Cl.⁴: **F 02 C 6/18**

(21) Application number: **79901563.1**

(22) Date of filing: **18.10.79**

(86) International application number:
**PCT/US79/00861**

(87) International publication number:
**WO 80/00864 01.05.80 Gazette 80/10**

(54) **REHEAT GAS TURBINE.**

(30) Priority: 26.10.78 US 954838
11.06.79 US 47571

(43) Date of publication of application:
07.01.81 Bulletin 81/01

(45) Publication of the grant of the patent:
03.06.87 Bulletin 87/23

(84) Designated Contracting States:
CH DE FR GB SE

(56) References cited:
DE-A-1 074 326
FR-A-1 263 916
GB-A- 656 102
GB-A- 746 377
SU-A- 182 177
US-A-2 605 610
US-A-2 616 252
US-A-2 633 707

The file contains technical information
submitted after the application was filed and
not included in this specification

(73) Proprietor: RICE, Ivan G.
1007 Lynwood P.O. Box 233
Spring, TX 77373 (US)

(72) Inventor: RICE, Ivan G.
1007 Lynwood P.O. Box 233
Spring, TX 77373 (US)

(74) Representative: Funge, Harry et al
WILSON, GUNN & ELLIS 41-51 Royal Exchange
Cross Street
Manchester M2 7BD (GB)

(56) References cited:
US-A-2 675 672
US-A-2 743 579
US-A-3 398 525
US-A-3 423 069
US-A-3 619 077
US-A-3 729 930
US-A-3 816 022
US-A-3 826 080
US-A-3 969 891
US-A-3 992 876
US-A-4 028 884
US-A-4 030 288

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

(56) References cited:

**US-A-4 094 148**
**US-A-4 099 374**
**US-A-4 206 593**

**WÄRME, vol. 84. no. 1, March 1978, pages 26-32 München-Graefelring, DE. J.H. THOMAS: "Entwicklungstendenzen und - probleme der thermischen Kraftwerksturbinen"**

**BROWN BOVERI REV., vol. 65, no. 10, October 1978, pages 680-686 Baden, CH. R. KEHLHOFER: "Combined gas/steam turbine power plants for the cogeneration of heat and electricity"**

**ENGINEERING DESIGN, COUNCIL, vol. 218, no. 4, April 1978, pages 349-351 London, G.B. H.E. JOHNSON: Industrial gas turbine developments"**

**Münzberg HG. "FLUGANTRIEBE" 1972 Springer-Verlag Berlin, Heidelberg New York pages 308-309**

**Description**

This invention relates generally to the production of useful power by means of a combined gas turbine and steam turbine cycle including reheating of exhaust gas formed in the first part of the gas turbine.

The reheat gas turbine cycle itself is well-known and has received considerable attention over the years, particularly in Europe. U.S. Patent Specification No. 2605610 (Hermitte) discloses a combined cycle power generating system.

A regenerator has been used to heat a compressor's discharge air to improve cycle efficiency, and intercooling has been suggested for the same purpose. It is known that reheating can increase power output by 35 to 40%. But without use of regeneration, overall cycle efficiency is degraded.

Yet, despite the existence of known technology, combined cycle power plants, such as those which utilize the processes and apparatus of the present invention, have not been developed.

Another attempt at a reheat combustor is described in U.S. Patent 4,206,593 filed May 23 1978. This patent, like the preceding patent, does not describe, show or suggest the required diffuser nor is there a larger diameter shown for a low velocity combustor required for low total pressure loss. This latter patent also presents a high velocity combustor with ventures.

The present invention provides apparatus for generating useful power comprising a compressor (24) wherein ambient air is compressed and then fed to a combustor (30) where it reacts with fuel to form a first gas which impels a gas turbine (28) and driving said compressor (24), gas exhausted from the gas turbine (28) passing to a diffuser (124, 130) whence it passes to a reheat combustor (36) where it reacts with further fuel to produce a second gas which drives a power turbine (42), which mechanically powers a first electrical generator (44), and which exhausts a third gas which is fed to a heat exchanger (50) wherein the third gas is cooled and liquid water is heated to convert it to steam which drives a steam turbine (68) mechanically connected to a second electrical generator (70), characterised in that:—

(a) the diffuser (124, 130), an axial flow device, is a diffuser in the strict thermodynamic and aerodynamic sense is at least four feet (1.2 m) in length and gradually increases in cross-section from its inlet to outlet to receive the exhaust from the gas turbine (28) and to slow the exhaust from the gas turbine and increase the static pressure head substantially without separation and turbulence of the exhaust gas before its entry to the reheat combustor (36), which is disposed immediately downstream of the diffuser and produces said second gas which passes through an axial flow annular acceleration duct (154) immediately before its entry to the power turbine (42); and in that

(b) the third gas is exhausted from the power turbine (42) at a temperature between 1200°F and 1400°F (649 and 760°C).

The invention will be described further by way of example, with reference to the accompanying drawings, wherein:—

Figure 1 is a schematic view of a gas generator with a reheat gas power turbine driving an electric generator, along with a steam turbine driving a second electric generator in a combined reheat gas power turbine and steam turbine cycle.

Figure 2 is a side elevational view, partly in diagrammatic section, of a gas generator with an associated second reheat combustor.

Figure 3 is a schematic view of a gas generator with a combustor cavity associated with a reheat gas power turbine and provided for steam superheating and steam reheating.

Figure 4 is a longitudinal sectional view of an axial flow reheat combustor cavity for effecting gas turbine reheating, steam superheating and steam reheating.

Figure 5 is a transverse sectional view of the combustor of Figure 4 showing in addition details of the mounting support and gib-key.

Figure 6 is an enlarged transverse sectional view of a tube for superheating steam and/or reheating in the combustor cavity of Figure 4.

Figure 7 is a graph showing cycle efficiency as a function of net power output for various cycle pressure ratios and firing temperatures for each of three conditions of no reheat, partial reheat and full reheat.

Figure 8 is a graph showing the fuel ratio of the first combustor and the reheat combustor as a functional cycle pressure ratio for various firing temperatures.

Figure 9 is a graph showing the combined output as a function of the firing temperature for both a simple cycle and a full reheat cycle gas turbine.

Figure 10 is a fragmentary sectional view of a modified form of the combustion cavity of Figure 3, showing its adaptation for burning of finely divided solid fuel, such as powdered coal.

Figure 11 is a side elevational view, partly in diagrammatic section, of a gas generator and a reheat power turbine, such as can be used in combined reheat gas power turbine and steam turbine cycle, the components of which can be cooled by steam to permit high temperature and high pressure operation.

Figure 12 is a schematicized sectional view of a first-stage nozzle vane showing regions of typical radiation and convection heat flux around the vane, bounded by combined heat transfer coefficients for 2000°F (1093°C) turbine inlet temperature.

Figure 13 is a transverse sectional view of a first-stage nozzle vane adapted for use of steam as a coolant.

**0 020 594**

Figure 14 is a sectional view of the trailing end of the nozzled vane of Figure 13, taken substantially upon a plane passing along section line 15—15 of Figure 13.

Figure 15 is an enlarged view of the leading edge of the head nozzle vane of Figure 13, showing flow of steam therethrough.

Figure 16 is a longitudinal sectional view of the leading edge of the nozzle of Figure 15, taken substantially upon a plane passing along section line 16—16 on Figure 15.

Figure 17 is an enlarged sectional view of the nozzle portions of the vane of Figure 13, showing velocity profiles for the gas generator first stage nozzle vane steam nozzle.

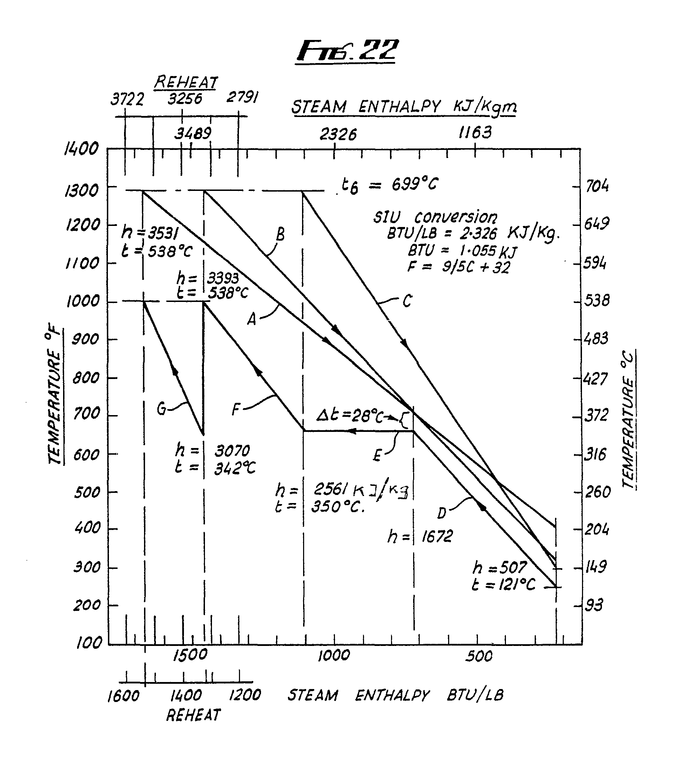

Figure 18 is a perspective view of a steam cooled gas generator first-stage rotating blade.

Figure 19 is a transverse sectional view of the rotating blade of Figure 18, taken substantially upon a plane passing along section line 19—19 on Figure 18 and showing circulation patterns of steam therethrough.

Figure 20 is an enlarged view of the front portion of an alternative embodiment of rotating blade incorporating leading edge transpiration steam cooling and thermal barrier steam flow.

Figure 21 is a schematicized sectional view of a gas generator incorporating steam cooling.

Figure 22 is a graph showing the relationship of temperature and enthalpy of both the steam being generated and the exhaust gases for three conditions: superheated and reheated steam, superheated steam only, and thirdly saturated steam only with no superheat. This graph also presents the effect the boiler approach temperature has on final stack temperature.

Figure 23 is a temperature-entropy diagram for the reheat steam turbine cycle with cooling steam applied to a reheat gas turbine.

Figure 24 is a cooling steam schematic flow diagram for a reheat steam turbine and reheat gas turbine.

The detailed description that follows relates to second generation gas turbines now being developed and made available on the market. These second generation gas turbines operate at cycle pressure ratios of 18 and higher and have turbine inlet temperatures of 2000°F (1093°C) and higher.

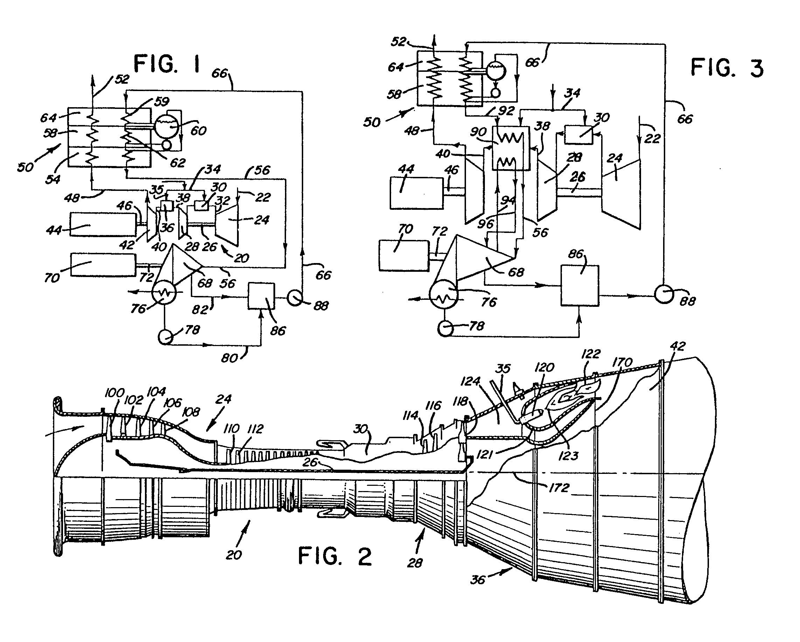

In Figure 1, gas generator 20 receives ambient air through inlet line 22, producing compressed air by compressor 24, which is driven through shaft 26 by gas generator turbine 28, which is powered by gas produced in first combustor 30 to which compressed air is fed through line 32. Fuel enters combustor 30 through fuel line 34. Reheat or second combustor 36 receives high velocity exhaust from gas generator turbine 28 through reheat axial flow annular diffuser 38 and discharges reheated gas through axial flow annular acceleration duct 40 to power turbine 42, which drives first electric generator 44 directly by shaft 46. Reheat gas output leaves power turbine 42 through exit line 48 and passes into heat exchanger 50 prior to discharge through stack line 52. Exit gases through exit line 48 pass through three stages of heat exchanger 50, the first being superheater 54, where superheated steam is produced through superheat line 56; the second being evaporator 58, where water from storage drum 60 and combined recycled water is evaporated in line 62; and the third being economizer 64, where water from storage drum 60 and recycled water from line 66 is heated before being evaporated in line 62 of evaporator 58. In economizer 64, recycled water entering from line 66 is warmed for evaporation in line 59 before entering evaporator 58. Superheated steam leaving superheater 54 through line 56 enters and drives steam turbine 68, which directly powers second electric generator 70 through shaft 72. Condensate from steam turbine 68 is formed and collected in condenser 76 and pumped by condenser pump 78 through line 80, along with steam formed directly in turbine 68, through line 82, to heater 86, the output of which is fed by boiler feed pump 88 to recycle line 66. It is to be particularly noted that a tandem arrangement of gas generator and turbine combination can be utilized, with first electric generator 44 being powered by two such arrangements, the reheat exhaust gas output of which feeds into exit line 48. It should further be noted that each of the individual components of the system shown in Figure 1 with the exception of the diffuser reheat combustor and acceleration duct are conventional and only the combined arrangement including these three parts leading to the advantages and efficiencies disclosed in the present invention, are intended to be described as new. Steam cooling/injection, not shown in Figure 1, another part of this present invention is likewise considered new.

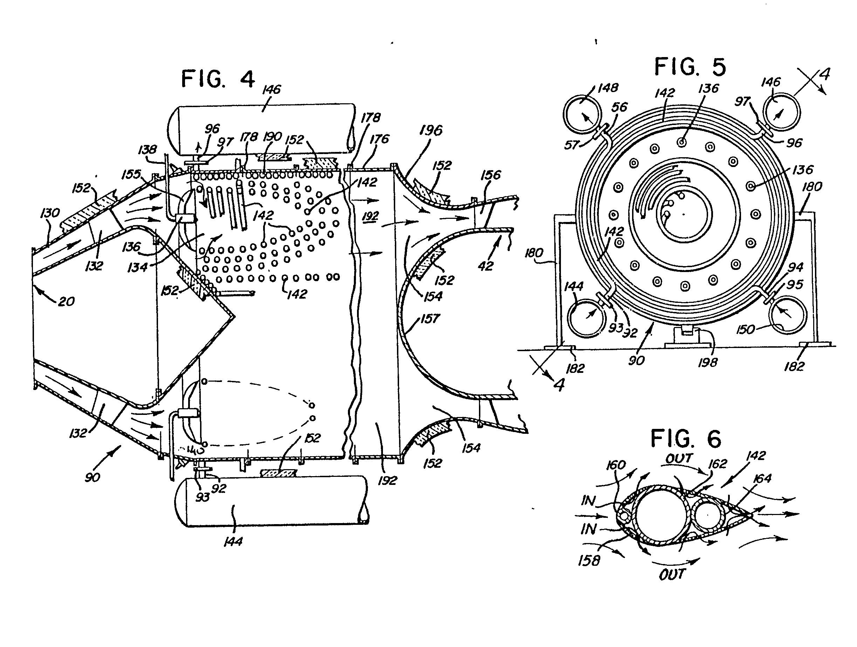

In Figure 3, gas generator 20 functions in the same manner as the gas generator described for Figure 1, and steam turbine 68, condenser 76, heater 86, and pumps 78 and 88 function in the same manner as in Figure 1. However, the output of gas generator 20 enters reheat combustor 90 through axial flow annular diffuser 38, reheat combustor 90 being, a combined reheat combustor and superheater, reheating exhaust gas from diffuser 38 of gas generator 20 and discharging reheated gas through axial flow annular acceleration duct 40 to drive power turbine 42, which drives first electric generator 44 by means of shaft 46. Reheat combustor 90 also superheats the output from evaporator 58, entering reheat combustor 90 through line 92 and leaving through line 56, for driving steam turbine 68. Reheating of steam also occurs in cavity 134 (see Figure 4), the steam entering cavity 134 through line 94 and leaving reheat combustor 90 through line 96 to enter steam turbine 68 at a stage downstream of the inlet from superheated steam line 56. Steam turbine 68 drives second electric generator 70 through shaft 72, and recycling of condensed output through line 66 occurs through economizer 64 and evaporator 58.

Figure 2 is a representation of gas generator 20 in association with reheat combustor 36, although gas generator 20 could also be associated with cavity 134 for performing both a reheat and steam superheating function. In either instance, a substantially linear axial flow of gas from gas generator 20 to power turbine.

4

42 is maintained. Gas generator 20 is made up of combustor 30 and air compressor 24, which has stages 100, 102 and 104, 106 and 108 of five-stage low pressure section, as well as stages 110 and 112, which are representative stages of a 14-stage high pressure section. Combustor 30 discharges compressed heated air to stages 114 and 116 of a two-stage high pressure section in gas turbine 28 and stage 118 of a one-stage low pressure section thereof. Shaft 26 connects compressor 24 with gas generator turbine 28. A number of high temperature and high pressure ratio gas turbines are now on the market, gas generator 20 in Figure 2 illustrating the second generation LM 5000 Model, other model designations currently available commercially including the LM 2500, JT 9, RB-211, Spey, and the Mars.

Gas generator 20 in Figure 2 is coupled with reheat combustor 36, showing fuel line 35, fuel nozzle 120, annular combustion cavity and acceleration region 122, diffuser 124, and the power turbine 42. It is to be understood that a plurality of fuel nozzles 120, arranged concentrically produce the annular flow of reheat gas which drives power turbine 42.

Alternatively, the output of gas generator 20 can feed reheat combustor 90 and cavity 134 shown in Figure 4, for performing both a reheat and a superheating function. Air from diffusion 130 passes around struts 132 and is heated in combustion cavity region 134 as fuel nozzle 136 discharges fuel for combustion therein. Fuel enters cavity 134 through fuel line 138 and is ignited by spark plug 140. Superheat and reheat helical tubing coils 142 are shown somewhat schematically in Figure 4, having the configuration of Figure 6 in enlarged detail. Boiler steam header 144 furnishes steam through line 92 to reheat combustor 90, and after boiler steam has traversed its helical path around and through cavity 134, it leaves reheat combustor 90 through line 56 for collection in boiler steam header 148. Reheat steam leaves reheat combustor 90 through reheat steam outlet line 96, entering reheat steam header 146. Reheat steam enters reheat combustor 90 through reheat steam inlet 94 from header 150. Insulation 152 surrounds reheat combustor 90, diffuser 130, headers 146, 148, 144 and 150, and also surrounds inlet power turbine acceleration duct 154. Exit gases pass through inlet nozzle 156 to drive turbine 42, passing next to power turbine first stage nozzle 156 as shown in Figure 4. The inside surface 157 of inlet duct 154 is in the shape of a nose of a bullet, while outside bell mouth 196 has the shape shown. Figure 6 shows stream-lined fabricated superheat tubing 142 containing perforated airfoil shaped extended surface sheath 158 surrounding three tube sections 160, 162 and 164 for enclosing superheated and/or reheated steam, the respective diameters of the tube sections varying according to the flow rates and throughput demanded of each component.

A portion of the hot gas flows in and out of the perforations to heat the steam. The sheathing provides streamlined section for gas directional control. The spacing between coils provides pressure drop and mass flow control.

The advantages of the cycle of the present invention, such as is accomplished with the combined superheating and reheating apparatus of Figures 4, 5 and 6 have been determined using established data of compression efficiency, combustor pressure loss, combustion efficiency, expansion efficiency and the like accepted by those skilled in the art.

Those skilled in the art of combined cycles can readily appreciate and understand, as explained later, thermodynamic advantage and higher combined cycle efficiency obtained through a minimum stack temperature and three stages of feedwater heating made possible by the combined apparatus.

A combined gas turbine reheat and steam turbine cycle with steam reheat generates an over-all power plant efficiency approaching or exceeding 50% LHV when burning the distillate fuel in the apparatus of Figure 4. These efficiencies represent improvements over the efficiencies obtainable with use of conventional electric power generating equipment, and can lead to considerable cost saving in actual operation.

Even without incorporation of the superheater in the second combustor, it is possible with an arrangement such as that of Figure 2 or a process shown in Figure 1 to obtain net cycle efficiencies approaching or exceeding 48.5 percent. These efficiencies represent improvements over the efficiencies obtainable with use of conventional electric power generating equipment and can lead to considerable fuel cost savings in actual operation. Table 1 provides a comparison of the cycle efficiencies and fuel consumption of the conventional combined cycle using a simple cycle gas turbine with both the reheat gas turbine combined with a non reheat steam turbine and with the reheat gas turbine incorporating combustor steam reheat combined with the reheat steam turbine. Equal firing temperatures at today's levels have been assumed.

# 0 020 594

### TABLE 1
### Cycle efficiency comparison

| Unit | Cycle Eff LHV | % Inc Eff | % Fuel consump |
|---|---|---|---|
| Conventional combined cycle | 44 | Base | 100 |
| Reheat G. Turb/ S. Turb (Figure 2) | 48.5 | 10.2 | 90.7 |
| Reheat G. Turb/ Reheat S. Turb (Figure 4) | 49.5 | 12.5 | 88.9 |

It should be noted that a savings in the heat recovery boiler capital cost would result, since the boiler would be simpler and have less surface and greater mean temperature difference. Moreover, the two superheaters would not be duplicated in the heat recovery boiler, effecting even further capital savings. These figures which are based on the standard industry accepted combined cycle available today having a cycle efficiency of 44% LHV, provide a clear indication of the degree of commercial success expectable from the two embodiments of the present invention, but the existence of uncertanties, such as rising fuel costs, limited future oil supply, coal fuel development, high interest rates, power rate increases, and other uncertainties, could result in a shift favouring the embodiments of the present invention to an even greater extent in the future.

Considerations incident to the reheat turbine combustor of the present invention as shown in Figure 2 are the following. Combustor 36 incorporates an annular liner 121 flaring outwardly to an axial flow annular acceleration duct 122 and then to an exit plane 170 at power turbine 42. Fuel nozzles 120 are disposed in liner 121 and have orifices 123 equally spaced on an orifice plane and separated by a chord width having a chord width diameter with respect to axis 172 of the entire arrangement. Fuel nozzles 120 are directed outwardly along a pitch line forming a pitch angle with respect to axis 172, the intersection of the pitch lines with exit plane 170 having a pitch line diameter in a certain preferred ratio to the chord diameter. This ratio is determined by calculating the volume ratio of gases at the exit plane and at the orifice plane by applying Boyle's law. PV=WRT. Under typical conditions the output gas at the exit plane of the gas generator combustor 30 has a temperature of approximately 2100°F (1149°C) and a pressure of approximately 30 atmospheres, while the exhaust gas at the orifice plane of the reheat combustor 36 has a temperature of approximately 1800°F (982°C) and 3.75 atmospheres. Accordingly, a volume ratio of 6.9 is obtained, and this value is preferably increased slightly to produce a lower pressure drop across combustor 36.

The volume ratio of 6.9 translated to pitch line diameter ratio of the gas generator annular combustor outlet compared to the reheat combustor annular outlet is the square root of the volume ratio or approximately 2.63 which is clearly evidenced by referring to Figure 2 and comparing the diameter of blade 114 versus the diameter of outer nozzle diameter 170.

This area ratio, or relative increase in annular combustor cavity 122 and 134 cross-sectional flow area then provides combustor 36 and 90 and cavity 122 and 134 forward flow velocity equal to and preferred less than that of the gas generator combustor 30. The area ratio or relative increase in inlet area in front of combustor cap 155 and around the combustor liner 121 and around steam tubing 142 is calculated in the same manner to provide low approach and liner inlet velocities commensurate with low velocity-low pressure drop industrial type combustors, the total liner or steam coil pressure loss being about 2 to 2½ percent and the approach velocities being about 100 feet per second (30 m/sec) or less for such industrial type combustors well known to those skilled in this art.

Moreover, diffuser 124 and in the alternative apparatus, diffuser 130, Figure 4, has a length of at least four feet (1.2 metres) to prevent separation and resulting turbulence of incoming gas.

Referring to Figure 2, the diffuser is shown somewhat schematically to reduce the drawing length, and the cross-sectional annular flow area change from the diffuser inlet to the diffuser outlet is shown to be about five. However, this is only a schematic representation and of course to achieve a lower exit velocity the area ratio of inlet to outlet would have to be greater on an actual machine.

Referring now to Figures 4 to 6, the required diameter of reheat combustor 90 is about 10 feet (3 m), which takes into account a gas velocity of about 100 feet per second (33 mm/s) and the increase in area required to accommodate superheater tubes 142, assuming an average gas temperature of about 2000°F (1093°C). The increase in area to accommodate tubes 142 is about 70%. The length of diffusor and reheat combustor 90 combined can vary somewhat according to the surface area required for superheating, and a workable length is about 18 feet (5,49 m). Outer shell 176 is fabricated in sections about two feet long and bolted together at joints 178 so that superheater coils 142 can be inserted properly. The outer shell 176 and associated pipes 56, 92, 94, 96, etc., can be disconnected from headers 144, 146, 148 and 150 at flanges 57, 93, 95, 97, etc., for removal of the two foot sections of outer shell 176. Superheater tubes 142 are wrapped

6

# 0 020 594

around in a manner to form helical coils of specific configurations, such as that illustrated in Figure 6. Coils 142 form an annular combustion cavity 134 and control air flow to burner 136. Downstream from burner 136 coils 142 then temper hot combustion gases and distribute them through more coils 142. Combustion cap 155 for primary combustion air control can also be seen.

In the arrangement shown in Figure 5, cold steam enters at the bottom of reheat combustor 90, circulates through tubes 142 and then exits at the top for each superheater. Shell 176 can be center-line supported by supporting mounts 180 to control expansion and to maintain a reasonable center-line elevation with respect to foundation 182 and to satisfy axial alignment of gas generator 20 and power turbine 42. Furthermore gas generator 20 can be quickly and readily removed to service reheat combustor 90.

Tubes 142 are fabricated with three different sizes 160, 162 and 164, and are streamlined with perforated airfoil shaped overlays 158 to minimise pressure drop and control the hot gas flow as illustrated in Figure 6. The perforations allow proper temperature gas to enter and reach the surfaces of tubes 160, 162 and 164, thereby increasing considerably the effective heat transfer area. Diffuser 130 from gas generator 20 to reheat combustor 90 has an extra length, and the gas generator assisted by the angle of the struts 132 imparts a swirl to gas passing therethrough to give the gas a longer flow path to assist in diffusion of the gas entering cavity 134.

Power turbine 42 has an inlet acceleration duct consisting of an outer cone or bell mouth 196 and inner bullet-shaped nose 157 to reduce inlet loss from cavity 90 to power turbine 42, where velocity of gas is increased.

In both embodiments, a longer diffuser is possible between the gas generator and second combustor. It should be stressed that it is the longer diffuser axial length that is important. This length makes it possible to provide a gradual angularity change and a gradual increase in annular diffuser diameter to make full diffusion possible with very little loss (friction). The outlet internal and external diameters can be adjusted as needed without space restriction for the industrial gas turbine.

In the case of the reheat gas combustor a two-shaft design leads to high efficiency. In the case of the cavity for gas reheat, combined with steam reheat, the long diffuser provides for maximum velocity head recovery.

The total pressure loss in the diffuser and reheat combustor and acceleration duct all with an axial flow arrangement being part of this invention is assumed to be 3 percent as given in the assumption of Table II, line 7, where the combustor liner 121 or tubing 142 account for 2 to 2½ percent of this total loss in accordance with known and established data for low velocity (100 feet/sec) (30 m/sec) or less industrial type combustors.

TABLE II

Assumptions in efficiency calculations
Gas generator and steam reheat

| No. | Item | Value | Units |
|---|---|---|---|
| 1. | Inlet pressure | $10.13 \times 10^4$ | Pascal |
| 2. | Ambient temperature | 16 | °C |
| 3. | Power turbine efficiency | 87 | percent |
| 4. | Reheat gas turbine combustion loss | 3 | percent |
| 5. | Steam superheater combustion loss | 1 | percent |
| 6. | Steam reheat combustion loss | 1 | percent |
| 7. | Reheat combustor pressure drop | 3 | percent |
| 8. | Power turbine & generator loss | 2 | percent |
| 9. | Steam turbine & generator loss | 3 | percent |
| 10. | Boiler radiation & blowdown loss | 2 | percent |
| 11. | Constant reheat firing temperature | 982 | °C |
| 12. | Inlet & back pressure loss | 100 & 150 | mm of water |
| 13. | Condenser pressure | 50 | mm Hg absolute |
| 14. | Liquid fuel with 42,762 KH/Kg LHV | | |

7

**0 020 594**

Referring again to Figure 4, the cylindrical construction of reheat combustor 90 is apparent, leading to equal and even loop, that is, pressure vessel, stress. Coils 190 about the periphery of the inside of cavity 134 define and in effect form the combustion chamber thereof, and inside coils 190 serve as an insulator to shell 176. Moreover, inner coils 142 are arranged about the reheat combustion cavity region 134 to control gas flow and mixing. Coils 142 form the combustion liner and provide the required pressure drop of 2 to $2\frac{1}{2}$ percent between the outer gas flow around cavity 134 and inside cavity 134 which is the state-of-the art for low pressure drop, low velocity industrial combustors requiring a primary region for fuel/$O_2$ mixing, a secondary region for the burning (reaction) and a tertiary region for gas tempering and mixing, all well defined and understood by those skilled in this art. Plenum 192 serves to stabilize eddy currents before gas enters through inlet acceleration duct 154 of power turbine 42. Inlet accelerator 154 is configured to reduce pressure loss, through the shape of outside bell mouth 196 and bullet nose 157. Gib keys 198 permit control and maintenance of axial alignment during operation, and flex legs or trunnions (not shown) allow for axial expansion. Annular combustion caps 155 when used in combination with burner fuel nozzles 136 provides for even primary flame temperature distribution. The cylindrical construction of reheat combustor 90, with axial flow of gas therethrough, allows use of plurality of gas generator and reheat assemblies to permit adaption to large scale power plants on the order of 1000 megawatt size.

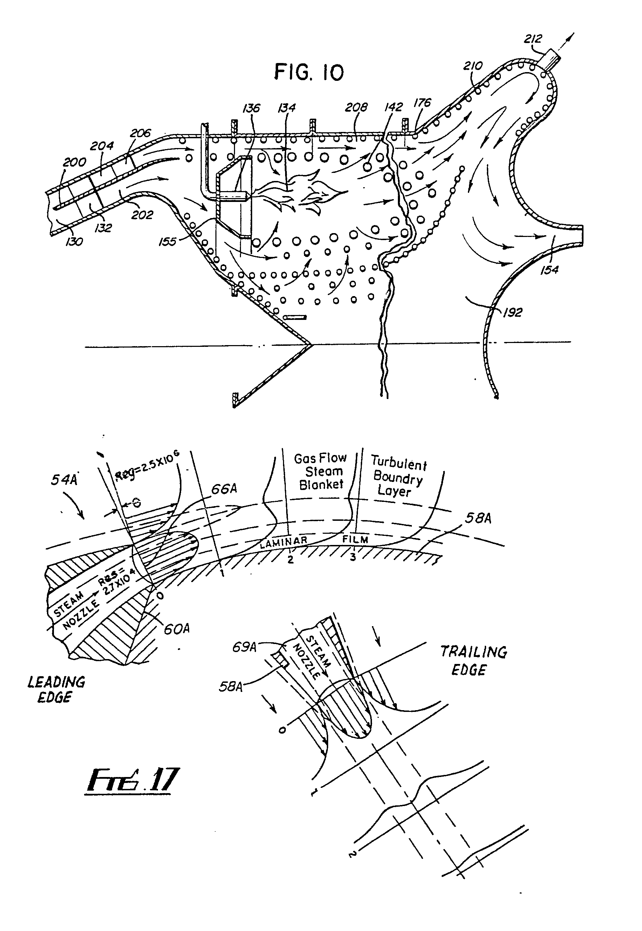

In the case of burning pulverized or powdered coal in burner 136, diffuser 130 will be equipped as shown in Figure 10 with circumferential divider 200 to separate incoming gas into an inner stream 202 and an outer stream 204, with outer stream 204 being given centrifugal motion by conventional streamlined turning vanes 206 to impart a greater spinning motion to outer stream 204. The combustion products from combustion of the coal inside cavity 134 are then directed into the outer spinning stream 208 by the pattern of coils 142 for the solid matter to be collected on the outer circumference of shell 176 into collector 210 by centrifugal force and bled off of plenum 192 through line 212. Combustion gas free of solid matter then enters accelerator duct 154 as described above.

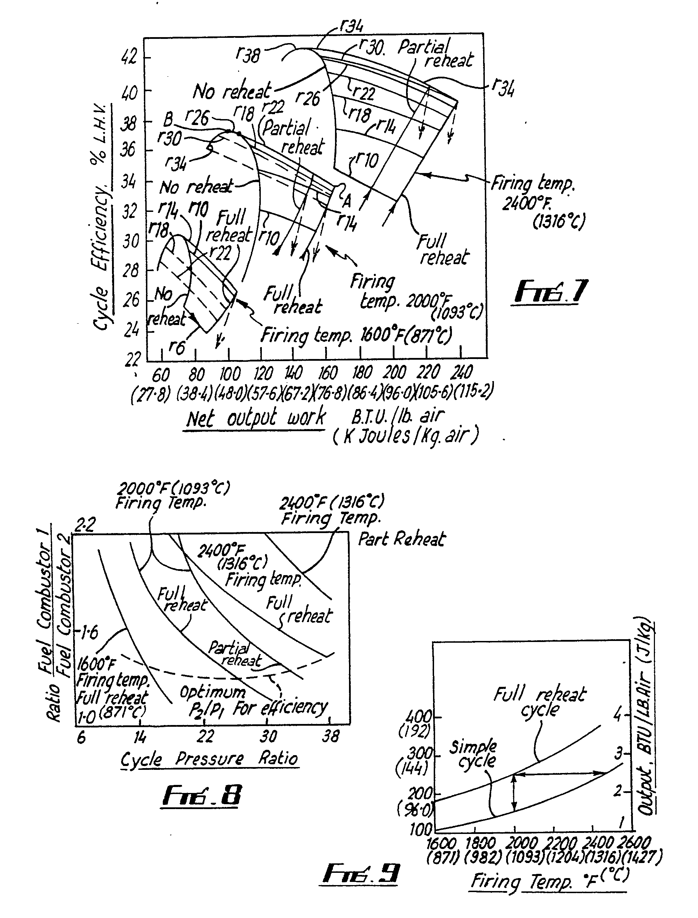

Figure 7 shows a graph of gas turbine cycle efficiency as a function of network output, illustrating the increase of both cycle efficiency and net output with increasing firing temperature, but also showing the dropoff of cycle efficiency while net output increases as gas reheat proceeds from no reheat to full reheat.

Figure 8 discloses another factor to be considered, namely, the amount of fuel to be burned in the reheat combustor 36 compared with the first combustor 30.

Figure 9 illustrates the effect on output for the combined gas turbine/steam turbine cycle operating with optimum steam pressures and maximum steam temperatures and steam reheat temperature for both simple cycle and reheat cycle gas turbines, as a function of firing temperature in the first combustor 30 and reheat combustor 90. Output increases substantially as firing temperature rises, and moreover, the reheat gas turbine combined cycle output has a slightly sharper rise than the simple cycle output.

Incorporating the steam superheat and steam reheat functions in the gas turbine reheat combustor 90 shifts the heat load away from the heat recovery boiler, economizer 64 and evaporator 58 and makes it possible to provide a simpler and less costly heat recovery boiler with less tube surface area with large temperature differentials between the exhaust gas and the water/steam. A lower cost heat recovery boiler is apparent with less pressure drop possible. Moreover, a minimum stack temperature and three stages of feedwater heating can be realized both of which increase combined-cycle efficiency. Figure 22 illustrates how this is accomplished by showing three conditions: first for superheating and reheating (Condition A), second, for superheating only (Condition B), the third for no superheating or reheating (Condition C).

Figure 22 also illustrates that the gas temperature to the heat recovery boiler 50 is about 1300°F (704°C) for the reheat gas turbine of my invention which is considerably above the 800 to 1000°F (427 to 538°C) state-of-the-art simple cycle industrial or aero derivative gas turbines. The exhaust gas in this latter case must be supplementarily fired for today's simple cycle gas turbine to obtain the desired temperature level of 1300°F (704°C). This procedure requires added duct burners and a greater exhaust back pressure. More importantly, it is impossible to superheat steam to the utility standard superheat temperature level of 1000°F (538°C), line F, with the exhaust temperature of 800 to 1000°F (427 to 538°C) let alone provide gas temperature levels high enough to reheat the steam, line G. Further, a much higher stack temperature results for the lower exhaust temperature for a given boiler approach (pinch) point.

Power turbine exit temperatures are not as sensitive to cycle pressure ratios as gas generator exit temperatures. With second generation gas generators, such as that described above in connection with the present invention, the cycle pressure ratios available range from 18 to 30, and the gas generator has a 2000°F (1093°C) or higher firing temperature, giving exit temperatures within practical limits for reheat cycle. It should be noted that when considering heat recovery, the power turbine exhaust temperature is important. The power turbine exhaust temperature ranges are ideal for heat recovery in the combined cycle. It is well known that the best range of exit temperatures for heat recovery boilers is between 1200 and 1400°F (649 and 760°C).

As shown in Figure 7 the value of gas reheat in improving over-all cycle efficiency, demonstrates and substantiates the advantages of the first embodiment of the present invention, providing for gas reheat. Still greater advantages can be obtained with the second embodiment of the present invention, providing for gas reheat and steam reheat.

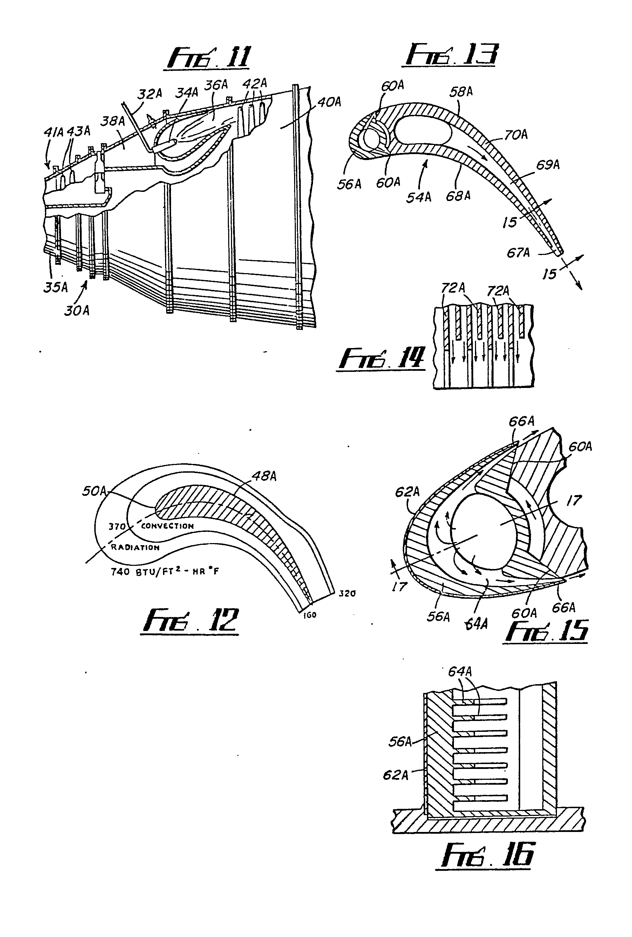

Figure 11 shows a gas generator 41A, gas generator blading 43A, a reheat combustor 30A, including fuel line 32A, fuel nozzle 34A, annular combustion region 36A, diffuser 38A, and power turbine 40A and

8

power turbine blading 42A. Ordinarily, a plurality of fuel nozzles 34A are arranged concentrically to produce the annular flow of reheat gas to drive the power turbine located rightwardly of Figure 11. Such gas generator and reheat combustor comprises components, such as blading 42A and 43A, which must withstand the temperatures generated by heated gases in annular gas generator combustion region 35A and power turbine combustion region 36A. Accordingly, the temperature of combustion gases obtainable is limited by the ability of internal components to maintain structural integrity and be free from corrosion for prolonged periods of operation. With the present invention, cooling of these components by use of steam permits higher operating temperatures to be attained with minimum cycle degradation and with greater efficiency than if such component were air cooled. An over-all increase in efficiency can result over and above the power plant efficiency approaching or exceeding 50 percent LHV. (Lower Heating Value), as disclosed above. In fact, an efficiency approaching or exceeding 55 percent LHV is possible with use of steam cooling and thermal barrier protection as taught by the present invention.

From calculations, the theoretical efficiency obtainable can be shown to be 56.7 percent LHV. This optimum efficiency does not compensate for blade cooling, but summarizes the theoretical maximum obtainable. If steam is used for blade cooling and if the steam can be heated to within 300°F (167°C) of the firing temperature in the process of blanket cooling or thermal barrier cooling, then the combined cycle efficiency would be slightly degraded to a value of about 56 percent LHV, and if a safety factor is applied for the steam to be heated to a lower value of approximately 600°F (333°C), then 55 percent LHV can reasonably be selected as a target efficiency value. Considerable incentive exists to maximise blade cooling and thermal barrier protection from a cycle efficiency by use of the steam. Cycle degradation is greater with liquid water as a coolant, and it is possible and likely that higher firing temperatures offer little or no advantage over somewhat lower firing temperatures.

Figure 12 illustrates typical heat flux values, where the total transfer coefficients around vane 48A are resolved into radiation and convection values, which are independent of each other.

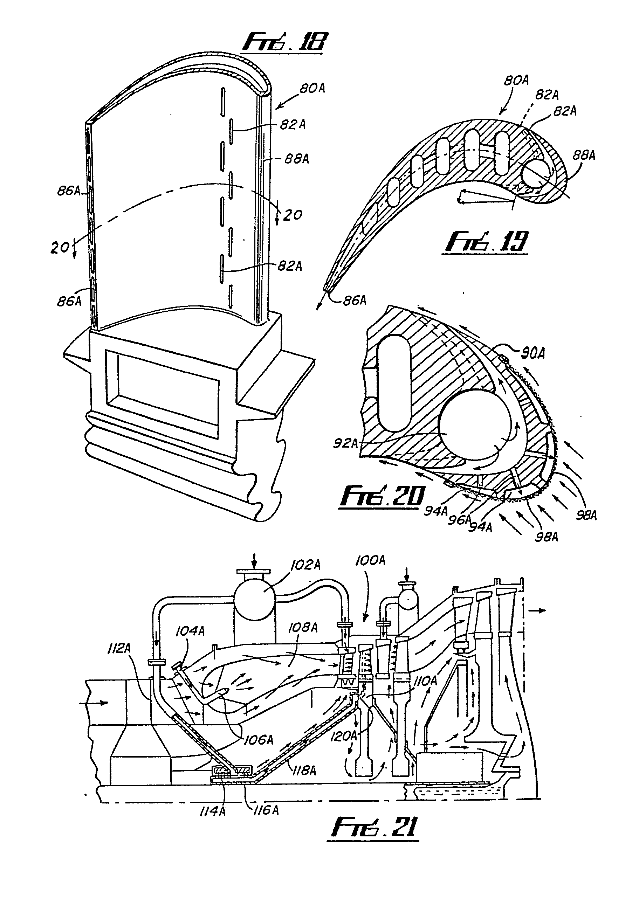

In conventional air-cooled first-stage nozzles for gas turbines constructed according to present technology, many cooling weep holes on the vane surface and leading edge are provided to permit cooling air to exit outwardly at a low velocity to be accelerated by the stream and carried over the vane nozzle surface. The main gas stream must accelerate the coolant and in the process only a partial film is formed due to the mixing process that takes place and gaps between the exit holes commonly referred to as weep or gill holes. If steam is substituted for air, first-stage nozzle design of the gas generator is modified to the form shown in Figures 13, 14, 15 and 16. Figure 13 suggests that leading edge 56A of vane 54A be constructed separately from vane body 58A and allowed to float as leading edge 56A expands radially inwardly from a fixed peripheral anchor point 60A. It should be noted that leading edge 56A receives the greatest heat flux from radiation and convection, and separation of leading edge 56A will keep heat away from body 58A of vane 54A. Leading edge weep-holes can additionally be employed on leading edge 56A to assist in absorption of radiant heat.

Built-in steam nozzles in the form of full length slots are incorporated in leading edge 56A, as is best seen in the enlarged view of Figure 15. Leading edge 56A can be made of solid ceramic material or coated with ceramic thermal heat barrier 62A and body portion 58A has extended surface horizontal fins 64A, best seen in cross-sectional view Figure 16, for convective heat removal. Fins 64A also provide steam-nozzle guides or ducts. Floating leading edge 56A can be made removable from body portion 58A so that replacement or recoating is easy during overhaul of vane 54A. Preferably, steam exits along the entire surfaces of vane 54A through leading edge nozzles 66A tangentially, or as closely as possible to tangentially, with a very small reactive velocity. Steam can also exit through trailing edge nozzle 67A on trailing edge portion 69A and will preferably emerge with a velocity nearly equal to the gas velocity near nozzle 67A. Velocity profiles of the steam and gas are shown in Figure 17 at the nozzle slot exits.

The general arrangement shown in Figures 13 to 16 points to other advantages of steam cooling. The steam can be used to start the gas generator as there is ample flow of steam.

Another advantage of steam cooling is the nozzle and blade-cleaning ability of steam when the gas turbine is shut down.

A second form of rotating blade adapted for steam cooling is shown in Figure 20, where another alternative to the high leading edge heat flux involves incorporating transpiration cooling at a sacrifice in surface roughness. Blade 90A shows how such a process can be accomplished using transpiration cooling with steam as the coolant. Steam is metered from plenum chamber 92A to transpiration chambers 94A through small orifices 96A. The steam under controlled pressure is then allowed to flow through porous wire braiding 98A.

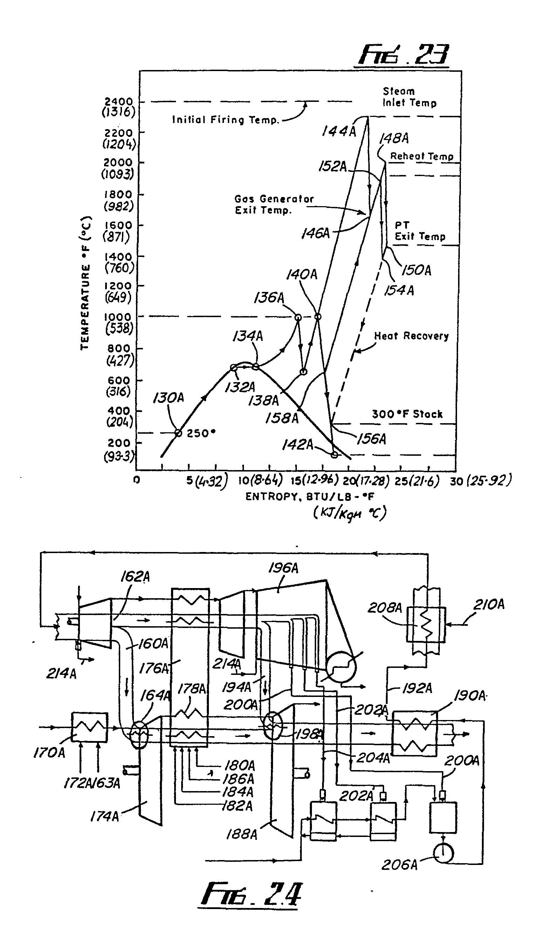

The cooling steam is introduced through the turbine wheel in a manner similar to that in which air is introduced with present conventional air cooling techniques. However, in order to obtain a higher pressure inside the blades, a modified approach is desirable, as shown in Figure 21. Steam enters steam header 102A of gas generator 100A. Gas feed line 104A furnishes combustible gas to fuel nozzle 106A, and heated gases are formed in combustion region 108A to pass through turbine wheel 110A. Cooling steam is introduced through turbine wheel 110A where steam lines are brought through bearing struts 112A to labyrinth packing or seal 114A at the small diameter of shafting 116A. Steam then flows internally in annular cavity 118A up to entrance holes 120A of turbine wheel 110A.

The over-all cycle of the steam working fluid of the steam turbine in the combined cycle is given in Figure 23 where cycle temperatures are plotted against cycle entropies. Tracing the steam turbine cycle, water is pumped from point 130A through the economizer where it is heated to point 132A the evaporator entrance point. The water is evaporated from point 132A to point 134A in the heat-recovery boiler and then receives its first superheat from point 134A to point 136A in the second gas turbine combustor by steam coils 142 Figure 4. The steam then expands through the steam turbine to point 138A providing useful work. The steam is again superheated from point 138A to point 140A in the second combustor by coils 142 before expanding again in the steam turbine from point 140A to point 142A, the condensation point.

The extracted steam that is used to cool the reheat gas turbine blading is hypothetically separated from the main gas stream for analysis as will now be discussed with reference to Figure 23.

Steam is extracted at the high pressure steam turbine exhaust line to the reheat point 138A and is heated in the gas generator first stage nozzles and blading to point 144A some 300 to 600°F (167 to 333°C) below the first combustor exit temperature. The steam at this point is part of the gas turbine flow. It can be noted that the gas turbine cycle ratio of 38 allows for 60 to 70 psi (414 to 483 KPa) steam pressure drop. About 10 psi (68.95 KPa) would be needed to transport the steam to the blading—making about 50 psi (345 KPa) available for cooling which is much more pressure than now realized for air cooling.

Extraction steam, not shown in Figure 23, is likewise used for cooling the second-stage gas generator blading. Steam at point 158A is extracted for cooling the first-stage blading of the power turbine where the steam is heated from point 158A to point 152A and expanded to point 154A. It should be noted that the steam previously used for the gas generator is heated in the second combustor all the way to point 148A the full reheat temperature before expansion as it is a homogeneous mixture. The gas turbine reheat process increases the power developed by the gas generator cooling steam.

Heat is then recovered in the heat recovery boiler from points 150A and 154A to point 156A, the assumed 300°F (149°C) stack temperature. In accordance with the calculated steam cycle heat balance, the heat in the exhaust steam is converted to useful power at an efficiency of 40.43 percent LHV to complete the cycle.

The steam flow can be broken down for purposes of analysis schematically as shown in Figure 24. The cooling steam is separated from the main stream in a hypothetical way but not in reality a procedure often done in analysing single and double automatic extraction/admission steam turbine cycles.

In the case of the reheat gas turbine, steam in line 160A is extracted from the high pressure steam turbine exhaust line 162A and is heated in the first stage gas generator blading—designated as heat exchanger 164A. The steam is now part of the gas turbine flow. Incremental fuel is introduced in line 163A and burned in combustor 170A to preheat this steam as it passes through and around the blading as will be shown later. The main fuel for the gas turbine enters through inlet line 172A.

The cooling steam, after expanding through gas generator turbine 174A, is again heated in combustor 176A at heat exchanger 178A, the heat being supplied as fuel in line 180A. Fuel for the main steam stream enters from line 182A; the cooling steam for the power turbine from line 184A and the main gas turbine air flow from line 186A.

The heated gas generator turbine cooling steam then expands through power turbine 188A to produce power after which the steam is exhausted to reheat recovery boiler heat exchanger 190A, where heat is extracted to heat feed water line 192A. The final stack temperature of 300°F (149°C) is assumed to be compatible with the main heat-recovery boiler stack temperature.

Cooling steam for the power turbine in line 194A is extracted from the low-pressure steam turbine 196A and is heated by power turbine first-stage blading designated as heat exchanger 198A. The steam, now part of the gas turbine stream, then continues to expand to the exhaust where it is also recovered in heat recovery boiler heat exchanger 190A.

Extraction steam that flows in lines 200A, 202A and 204A is used to heat the feed water from 101°F (38.8°C) to 240°F (116°C). Boiler feed pump 206A raises the temperature to 250°F (121°C). It is assumed that the make-up water arrives at an enthalpy (h) of 70 to be compatible with the heat balance cycle of Figure 24.

The total cooling steam is now heated in pseudo heat exchanger 208A by make believe fuel from line 210A to bring the steam back to the initial 2415 psia (16.55 MPa) 1000°F (538°C) condition. Heat exchanger 208A is used to determine the fuel required to complete the loop so that the cooling steam-cycle efficiency can be determined and evaluated.

Using data developed, Table III summarizes the effect steam substitution has an over-all combined-cycle efficiency.

10

TABLE III

| | Coolant | | Without cooling air | | Steam cooling | |
|---|---|---|---|---|---|---|
| | Air % | Steam % | Work BTU/Lb air (KJ/Kg) | Fuel BTU/Lb air (KJ/Kg) | Work BTU/Lb air (KJ/Kg) | Fuel BTU/Lb air (KJ/Kg) |
| First stage GG | 8 | 3 | | | | |
| GT | | | 10.59 (24.63) | 10.81 (25.14) | 21.16 (49.22) | 60.60 (141.0) |
| -ST | | | — | — | 6.17 (14.35) | — |
| Second stage GG | 4 | 1.5 | | | | |
| GT | | | 4.01 (9.33) | 4.29 (9.98) | 9.66 (22.47) | 28.85 (67.11) |
| ST | | | — | — | 3.09 (7.19) | — |
| First stage PT | 4 | 1.5 | | | | |
| GT | | | 0.80 (1.86) | | 4.50 (10.47) | 27.34 (63.59) |
| ST | | | 4.52* (10.51) | — | 5.89 (13.70) | — |
| Sub-totals | 16.0 | 6 | 19.92 (46.33) | 15.10 (35.12) | 50.47 (117.39) | 116.79 (271.65) |
| Cycle Eff % | | | 131.9* | | 43.21 | |

| | | | | |
|---|---|---|---|---|
| Change in PT exit temp. °F (°C) | 42 (23.3) | Original GT work BTU/lb air (KH/Kg) | | 206.85 (481.13) |
| Credit for exit temp. | | Inc. in GT work % | | 24.52% |
| @ 40% work BTU/Lb (KJ/Kg) | 4.52* (10.51) | Inc. in total work (Vs GT work) | | 34.93% |
| Increase in GT work BTU/Lb air (KH/Kg) | 50.72 (117.97) | Original comb cycle Eff % | | 56.00% |
| Increase in ST work (BTU/Lb air (KH/Kg) | 19.67 (45.75) | Over-all cycle Eff % LHV | | |
| Total increase in work BTU/Lb (KJ/Kg) | 70.39 (163.73) | 50% GT & 50% ST | | 55.62 |
| Total fuel BTU/Lb Air (KJ/Kg) | 131.89 (306.78) | Overall cycle Eff % LHV | | |
| Over-all Eff of inc work % LHV | 53.37% | 60% GT & 40% ST | | 55.56 |

*Assuming steam being heated to 300°F (149°C) of the 1st and 2nd combustor temperatures. This approach is not very critical and does not change the over-all cycle efficiency very greatly.

11

Notations

GG=Gas Generator
GT=Gas Turbine
PT=Power Turbine
ST=Steam Turbine
Gas turbine cycle pressure ratio=38

First combustor firing temp. °F=2500 (1371°C)
(Includes fuel added for steam heating)
Second combustor firing temp. °F=2050 (1121°C)
(Includes fuel added for steam heating).

Abbreviations used throughout the application are as follows:

HP—Horsepower
MPa—Megapascals
ER—Expansion Ratio

LHV—Lower Heating Value
h—Enthalpy

SIU conversation factors are as follows:

BTU—1.055 KJ
BTU/LB—2.326 KJ/Kg

PSI—6,895 Pa
F—9/5C+32

Throughout the specification and claims, unless otherwise specified, cycle efficiencies are expressed in terms of fuel lower heating value abbreviated LHV, power in kilowatts (KW), and parts and proportions in percent by weight.

The specification as originally published contains information over and above that contained in the present specification.

**Claims**

1. Apparatus for generating useful power comprising a compressor (24) wherein ambient air is compressed and then fed to a combustor (30) where it reacts with fuel to form a first gas which impels a gas turbine (28) driving said compressor (24), gas exhausted from the gas turbine (28) passing to a diffuser (124, 130) whence it passes to a reheat combustor (36, 90) where it reacts with further fuel to produce a second gas which drives a power turbine (42), which mechanically powers a first electrical generator (44), and which exhausts a third gas which is fed to a heat exchanger (50) wherein the third gas is cooled and liquid water is heated to convert it to steam which drives a steam turbine (68) mechanically connected to a second electrical generator (70), characterised in that:—

(a) the diffuser (38, 124, 130), an axial flow device, is a diffuser in the strict thermodynamic and aerodynamic sense, is at least four feet (1.2 m) in length and gradually increases in cross-section from its inlet to outlet to receive the exhaust from the gas turbine (28) and to slow the exhaust from the gas turbine and increase the static pressure head substantially without separation and turbulence of the exhaust gas before its entry to the reheat combustor (36, 90), which is disposed immediately downstream of the diffuser and produces said second gas which passes through an axial flow annular acceleration duct (40, 122, 154) immediately before its entry to the power turbine (42); and in that

(b) the third gas is exhausted from the power turbine (42) at a temperature between 1200°F and 1400°F (649 and 760°C).

2. Apparatus as claimed in claim 1 and further characterised in that heat exchanger (50) comprises a superheater (54), an evaporator (58) and an economizer (64), the superheater (54) receiving said third gas for exchange of heat therefrom and production of a fourth gas, the evaporator (58) receiving said fourth gas for exchange of heat therefrom to produce a fifth gas, and the economizer (64) receiving said fifth gas for exchange of heat therefrom and discharge into ambient surroundings.

3. Apparatus as claimed in claim 1, characterised in that: heat exchanges (50) comprises an evaporator (58) and an economizer (64), the evaporator receiving said third gas for exchange of heat to produce a fourth gas and the economizer receiving said fourth gas for exchange of heat therefrom and discharge in ambient surroundings and the production of superheated steam at elevated temperature is accomplished by introducing steam from said heat exchanger (50) via a line (92) to said reheat combustor (90) wherein the steam flows inside a first part of tubing (142) around and downstream of reheat combustor cavity (134) simultaneously with the process of reheating said first gas and the superheated steam leaves via a line (56) to the steam turbine (68).

4. Apparatus as claimed in claim 3, characterised in that steam for reheat is led from steam turbine (68) via a line (94) reheated in a second part of tubing (142) within reheat combustor (90), and exits via a line (96) back to steam turbine (68).

5. Apparatus as claimed in claim 3 or 4, characterised in that tubing (142) includes three tube sections (160, 162, 164), of different diameters, and a perforated overlay sheath (158) enclosing said tube sections (160, 162, 164), said sheath (158) having a streamlined airfoil configuration and being pierced by holes to allow a small portion of flow of the first gas therethrough into the interior of the sheath (158) to contact said tube sections (160, 162, 164).

12

6. Apparatus as claimed in any preceding claim, characterised in that: means is provided for introducing steam to internal stationary parts and discs (110A) and shafting (116A, 118A), of gas generator turbine (28) and power turbine (42) and cooling said internal parts; in that a first directional means is provided for introducing steam into the interior of blading (114), (116), (118), (156), (43A), (42A), (54A), (80A), (90A) of said gas generator turbine (28) and power turbine (42); and in that flow passages (66A, 82A, 96A) are provided for directing said steam from the interior of said blading to the external surfaces of said blading.

7. Apparatus as claimed in claim 6, characterised in that the gas generator (20) and power turbine (42) are steam cooled and comprise stationary vanes and rotating blades, each vane and blade having a leading edge portion (56A), (88A), (98A) for receiving leading edge steam and a trailing edge portion (70A), (80A) for receiving a separate supply of trailing edge steam.

**Patentansprüche**

1. Anlage zum Erzeugen von Nutzkraft mit einem Verdichter (24), in dem Umgebungsluft verdichtet und dann einem Brenner (30) zugeführt wird, wo sie mit einem Brennstoff reagiert, um ein erstes Gas zu bilden, das eine Gasturbine (28) beaufschlagt, die den genannten Verdichter (24) antreibt, wobei von der Gasturbine (28) ausgestoßenes Gas zu einem Diffusor (124, 130) strömt, von wo es zu einem Nacherhitzungsbrenner (36, 90) gelangt, wo es mit weiterem Brennstoff reagiert, um ein zweites Gas zu erzeugen, das eine Kraftturbine (42) antreibt, die als mechanischer Kraftantrieb eines ersten elektrischen Generators (44) dient und ein drittes Gas ausstößt, das einem Wärmetauscher (50) zugeführt wird, in dem das dritte Gas abgekühlt und flüssiges Wasser erhitzt wird, um es in Dampf überzuführen, der eine Dampfturbine (68) antreibt, die mechanisch mit einem zweiten elektrischen Generator (70) verbunden ist, dadurch gekennzeichnet, daß:

a) der Diffusor (38, 124, 130), ein Axialstromgerät, ein Diffusor im strengen thermodynamischen und aerodynamischen Sinne ist, zumindest eine Länge von 1,2 m (4 Fuß) und einen von seinem Einlaß zu seinem Auslaß fortschreitend zunehmenden Querschnitt besitzt, um das Abgas von der Gasturbine (28) aufzunehmen und das Abgas der Turbine zu verlangsamen und den statischen Druckwert wesentlich zu erhöhen, ohne eine Separierung und Turbulenz des Abgases zu bewirken, bevor es in den Nacherhitzungsbrenner (36, 90) eintritt, der unmittelbar stromabwärts des Diffusors angeordnet ist und das genannte zweite Gas erzeugt, das durch einen Axialstrom-Beschleuger-Ringleitung (40, 122, 154) unmittelbar vor seinem Eintritt in die Kraftturbine (42) strömt, und daß

b) das dritte Gas aus der Kraftturbine (42) mit einer Temperatur zwischen 649° und 760°C (1200°F und 1400°F) ausgestoßen wird.

2. Anlage nach Anspruch 1, dadurch gekennzeichnet, daß der Wärmetauscher (50) einen überhitzter (54), einen Verdampfer (58) und einen Wasservorwärmer (64) besitzt, der Überhitzer (54) das genannte dritte Gas erhält, um durch Wärmeaustausch von ohm ein viertes Gas zu erzeugen, der Verdampfer (58) das genannte vierte Gas erhält, um durch Wärmeaustausch von ohm ein fünftes Gas zu erzeugen, und der Wasservorwärmer (64) das geannte fünfte Gas erhälte, um Wärme von ohm auszutauschen und es an die Außenumgebung abzugeben.

3. Anlage nach Anspruch 1, dadurch gekennzeichnet, daß der Wärmetauscher (50) einen Verdampfer (58) und einen Wasservorwärmer (64) aufweist, der Verdampfer das genannte dritte Gas erhält, um durch Wärmeaustausch ein viertes Gas zu erzeugen, und der Wasservorwärmer das vierte Gas für einen Wärmeaustausch von demselben erhält und um es an die Außenumgebung abzugeben, und daß die Erzeugung des überhitzten Dampfes erhöhter Temperatur durchgeführt wird, indem Dampf von dem genannten Wärmetauscher (50) über eine Leitung (92) dem genannten Nacherhitzungsbrenner (90) zugeführt wird, worin gleichzeitig mit dem Vorgang der Nacherhitzung des genannten ersten Gases der Dampf innerhalb eines ersten Teiles einer Rohrleitung (142) um die Brennkammer (134) des Nacherhitzungsbrenners und stromabwärts derselben strömt und der überhitzte Dampf über eine Leitung (56) zur Dampfturbine (68) austritt.

4. Anlage nach Anspruch 3, dadurch gekennzeichnet, daß Dampf für die Nacherhitzung von der Dampfturbine (68) über eine Leitung (94) geführt, in einem zweiten Teil der Rohrleitung (142) innerhalb des Nacherhitzungsbrenners (90) nacherhitzt wird und über eine Leitung (96) austritt und zurück zur Dampfturbine (68) gelangt.

5. Anlage nach Anspruch 3 oder 4, dadurch gekennzeichnet, daß die Rohrleitung (142) drei Rohrabschnitte (160, 162, 164) unterschiedlicher Durchmesser sowie ein perforiertes Hüllblech (158) besitzt, das die genannten Rohrabschnitte (160, 162, 164) umhüllt, daß das genannte Hüllblech (158) eine stromlinienförmige Flügelprofilform aufweist und durch Löcher durchbrochen ist, um zu ermöglichen, daß ein kleiner Teil des Stromes des ersten Gases durch sie hindurch in das Innere des Hüllblechs (158) strömen kann, um die genannten Rohrabschnitte (160, 162, 164) zu bestreichen.

6. Anlage nach einem der vorangehenden Ansprüche, dadurch gekennzeichnet, daß Mittel vorgesehen sind, um Dampf inneren stationären Teilen, Scheiben (110A) sowie Wellen (116A, 118A) der Gaserzeugerturbine (28) und der Kraftturbine (42) zuzuführen und die genannten inneren Teile zu kühlen; daß ein erstes Führungsmittel vorgesehen ist, um Dampf in das Innere von Schaufeln (114, 116, 118, 156, 43A, 42A, 54A, 80A, 90A) der genannten Gaserzeugerturbine und Kraftturbine einzuführen; und daß

# 0 020 594

Stromungsdurchlässe (66A, 82A, 96A) vorgesehen sind, um den genannten Dampf vom Inneren der genannten Schaufeln zu den äußeren Oberflächen der genannten Schaufeln zu lenken.

7. Anlage nach Anspruch 6, dadurch gekennzeichnet, daß der Gaserzeuger (20) und die Kraftturbine (42) dampfgekühlt sind und stationäre Leitschaufeln und rotierende Schaufeln besitzen und daß jede Leitschaufel und jede Schaufel einen Vorderkantenteil (56a, 88A, 98A) für die Aufnahme von Vorderkantendampf, sowie einen Hinterkantenteil (70A, 80A) für die Aufnahme einer gesonderten Zufuhr von Hinterkantendampf aufweist.

## Revendications

1. Appareil de génération d'une énergie utile, comprenant un compresseur (24) dans lequel de l'air ambiant est comprimé puis envoyé à une chambre de combustion (30) où il réagit avec du combustible pour former un premier gaz qui actionne une turbine à gaz (28) entraînant ledit compresseur (24), du gaz s'échappant de la turbine à gaz (28) passant par un diffuseur (124, 130) d'où il passe à une chambre de combustion de réchauffage (36—90) où il réagit avec d'autre combustible pour produire un second gaz qui actionne une turbine motrice (42) qui entraîne mécaniquement un premier générateur électrique (44) et d'où s'échappe un troisième gaz qui est envoyé à un échangeur de chaleur (50) dans lequel le troisième gaz est refroidi et de l'eau liquide chauffée pour être convertie en vapeur qui actionne une turbine à vapeur (68) reliée mécaniquement à un second générateur électrique (70), caractérisé par le fait que:

a) le diffuseur (38, 124, 130), dispositif à flux axial, est un diffuseur thermodynamique et aérodynamique, dans le sens strict des mots, est d'au moins 1,2 m en longueur, et croît graduellement en section de son entrée à sa sortie pour recevoir l'échappement de la turbine à gaz (28) et ralentir l'échappement de la turbine à gaz et augmenter la pression statique, sensiblement sans séparation et turbulence du gaz d'échappement avant son entrée dans la chambre de combustion de réchauffage (36, 90), qui est disposée immédiatement en aval du diffuseur et produit ledit second gaz qui suit un conduit (40, 122, 154) d'accélération annulaire à flux axial immédiatement avant son entrée dans la turbine motrice (42) et

b) le troisième gaz s'échappe de la turbine motrice (42) à une température comprise entre 649 et 760°C.

2. Appareil selon la revendication 1, caractérisé en outre par le fait que l'échangeur de chaleur (50) comprend un surchauffeur (54), un évaporateur (58) et un économiseur (64), le surchauffeur (54) recevant ledit troisième gaz pour échange thermique avec lui et production d'un quatrième gaz, l'évaporateur (58) recevant ledit quatrième gaz pour échange thermique avec lui et produire un cinquième gaz, et l'économiseur (64) recevant ledit cinquième gaz pour échange thermique avec lui et décharge à l'extérieur ambiant.

3. Appareil selon la revendication 1, caractérisé par le fait que l'échangeur de chaleur (50) comprend un évaporateur (58) et un économiseur (64), l'évaporateur recevant ledit troisième gaz pour échange thermique en vue de produire un quatrième gaz, et l'économiseur recevant ledit quatrième gaz pour échange thermique avec lui et décharge à l'extérieur ambiant, et la production de vapeur surchauffée à température élevée est assurée par introduction de vapeur provenant dudit échangeur thermique (50), via une ligne (92), à ladite chambre de combustion de réchauffage (90) dans laquelle la vapeur circule dans un premier groupe de tubes (142) autour et en amont d'une cavité (134) de chambre de combustion de réchauffage simultanément avec le processus de réchauffage dudit premier gaz, et la vapeur surchauffée s'échappe, via une ligne (56), vers la turbine à vapeur (68).

4. Appareil selon la revendication 3, caractérisé par le fait que la vapeur pour réchauffage est menée à la sortie de la turbine à vapeur (68) via une ligne (94), réchauffée dans un second groupe de tubes (142) dans la chambre de combustion de réchauffage (90) et sort via une ligne (96) en retour sur la turbine à vapeur (68).

5. Appareil selon la revendication 3 ou 4, caractérisé par le fait que les tubes (142) comprennent trois groupes de tubes (160, 162, 164) de différents diamètres et une enveloppe perforée (158) recouvrant ces groupes de tubes (160, 162, 164), ladite enveloppe (158) possédant une configuration à profil d'aile aérodynamique et étant percée de trous pour permettre à une petite partie de courant dudit premier gaz de passer à l'intérieur de l'enveloppe (158) et arriver au contact des dits groupes de tubes (160, 162, 164).

6. Appareil selon l'une des revendications précédentes, caractérisé par le fait que des moyens sont prévus pour introduire de la vapeur dans des parties fixes intérieures et disques (110A) et arbres de transmission (116A, 118A) de la turbine génératrice de gaz (28) et de la turbine motrice (42) et refroidir ces parties internes, qu'un premier moyen directionnel est prévu pour introduire de la vapeur à l'intérieur des pales (114, 116, 118, 156, 43A, 42A, 54A, 80A, 90A) de ladite turbine génératrice de gaz (28) et turbine motrice (42); et que des passages d'écoulement (66A, 82A, 96A) sont prévus pour diriger ladite vapeur de l'intérieur desdites pales vers leurs surfaces externes.

7. Appareil selon la revendication 6, caractérisé par le fait que le générateur de gaz (20) et la turbine motrice (42) sont refroidis à la vapeur et comportent des aubes fixes et des pales rotatives, chacune des aubes et pales ayant une portion de bord menant (56A, 88A, 98A) pour recevoir de la vapeur de bord menant et une portion de bord de fuite (70A, 80A) pour recevoir une fourniture séparée de vapeur de bord de fuite.

14

FIG. 1

FIG. 3

FIG. 2

0 020 594

FIG. 4

FIG. 5

FIG. 6

0 020 594

0 020 594

Fig. 7

Fig. 8

Fig. 9

3

## FIG. 10

Gas Flow
Steam
Blanket

Turbulent
Boundry
Layer

LEADING
EDGE

*FIG.17*

TRAILING
EDGE

## FIG. 11

## FIG. 13

## FIG. 14

## FIG. 12

CONVECTION

RADIATION

740 BTU/FT$^2$ - HR °F

## FIG. 15

## FIG. 16

**FIG. 18**

**FIG. 19**

**FIG. 20**

**FIG. 21**

FIG.22

_Fig. 23_

_Fig. 24_